# EUROPÄISCHE PATENTANMELDUNG

(11) **EP 3 501 867 A1**
(43) Veröffentlichungstag der Anmeldung: **26.06.2019**
(21) Anmeldenummer: 18206910.4
(22) Anmeldetag: 19.11.2018
(51) Int. Cl.: B60K 1/00, B60K 17/36, B60K 17/356, F16H 3/44

(54) **ANTRIEBSVORRICHTUNG EINER ACHSE EINES KRAFTFAHRZEUGS**

(30) Priorität: 19.12.2017 DE 102017223134
(71) Anmelder: ZF Friedrichshafen AG, 88046 Friedrichshafen (DE)
(72) Erfinder: Solka, Ulrich, 94081 Fuerstenzell (DE)

(57) **Zusammenfassung**

Die Erfindung bezieht sich auf eine Antriebsvorrichtung einer Achse 16 eines Kraftfahrzeugs mit einer Elektromaschine 8, von der über eine Schaltstufe 7 und ein Differentialgetriebe zwei einander entgegengerichtete Halbachsen 2 drehbar antreibbar sind, an deren dem Differentialgetriebe abgewandten Enden Räder angeordnet sind. Das Differentialgetriebe ist eine Achsmittengetriebe 1, auf dessen zu den Halbachsen 2 einen Seite die Elektromaschine 8 und auf dessen zu den Halbachsen 2 anderen Seite die Schaltstufe 7 angeordnet ist, wobei die Schaltstufe 7 über einen die Achsausrichtung 3 der Halbachsen 2 querenden Durchtrieb 9 von der Elektromaschine 8 drehbar antreibbar ist.

## Beschreibung

Die Erfindung bezieht sich auf eine Antriebsvorrichtung einer Achse eines Kraftfahrzeugs mit einer Elektromaschine, von der über eine Schaltstufe und ein Differentialgetriebe zwei einander entgegengerichtete Halbachsen drehbar antreibbar sind, an deren dem Differentialgetriebe abgewandten Enden Räder angeordnet sind.

Aufgabe der Erfindung ist es eine Antriebsvorrichtung einer Achse eines Kraftfahrzeugs der eingangs genannten Art zu schaffen, die einen geringen Bauraum aufweist und einen zumindest weitgehend mittigen Schwerpunkt zwischen den Rädern besitzt.

Diese Aufgabe wird erfindungsgemäß dadurch gelöst, dass das Differentialgetriebe ein Achsmittengetriebe ist, auf dessen zu den Halbachsen einen Seite die Elektromaschine und auf dessen zu den Halbachsen anderen Seite die Schaltstufe angeordnet ist, wobei die Schaltstufe über einen die Achsausrichtung der Halbachsen querenden Durchtrieb von der Elektromaschine drehbar antreibbar ist.

Durch diese Ausbildung ist zum Antrieb der zwei Halbachsen nur eine einzige Elektromaschine und eine einzige Leistungselektronik erforderlich, wodurch sich eine Reduzierung der Komponenten und eine Bauraum- und Gewichtsreduzierung ergibt.

Weiterhin kann durch den erfindungsgemäßen Aufbau eine Konzentration der Masse mit einem Schwerpunkt zumindest weitgehend mittig zwischen den beiden Rädern erreicht werden, was zu einer zumindest weitgehend gleichmäßigen Belastung der beiden Halbachsen führt und eine zumindest annähernd gleiche Länge der Halbachsen ermöglicht.

Die nahezu mittige Anordnung der Elektromaschine erleichtert die Versorgung der Elektromaschine mit Strom und Kühlwasser und die Kabelführung verschiedenster Sensoren, da deren oft großen Querschnitte aufweisende Leitungen mit nur geringen Umlenkungen verlegt werden können.

Weist das Kraftfahrzeug einen Getriebetunnel auf, so können Elektromaschine, Schaltstufe und Achsmittengetriebe in dem Getriebetunnel geschützt angeordnet werden. Dies ist insbesondere bei einer Anwendung in militärischen Fahrzeugen aber auch bei Baufahrzeugen von Vorteil.

Sind das Achsmittengetriebe, die Elektromaschine und die Schaltstufe an einem Rahmen des Kraftfahrzeugs befestigt, so sind deren Massen zusammen mit dem Fahrzeugkörper gefedert und damit geringeren Belastungen ausgesetzt ist.

Dabei können das Achsmittengetriebe, die Elektromaschine und die Schaltstufe eine vormontierbare Baueinheit bilden, was die Montage vereinfacht und einen sehr kompakten Aufbau ermöglicht.

Mehrere Achsen des Kraftfahrzeugs können ein Achsmittengetriebe aufweisen, auf dessen zu den Halbachsen einen Seite die Elektromaschine und auf dessen zu den Halbachsen anderen Seite die Schaltstufe angeordnet ist, wobei die Schaltstufe über einen die Achsausrichtung querenden Durchtrieb von der Elektromaschine drehbar antreibbar ist.

Weiterhin ist es auch möglich, dass von dem Durchtrieb über eine zweite Schaltstufe ein zweites Achsmittengetriebe antreibbar ist, durch das zwei einander entgegengerichtete zweite Halbachsen drehbar antreibbar sind, wobei der Durchtrieb die Achsausrichtung der zweiten Halbachsen zu der auf der der ersten Schaltstufe abgewandten Seite des zweiten Achsmittengetriebes angeordneten zweiten Schaltstufe quert.

Damit sind durch eine einzige Elektromaschine zwei Achsen antreibbar.

Von der Elektromaschine kann über eine Anpassstufe der Durchtrieb drehbar antreibbar sein.

Durch die Anpassstufe ist eine Drehzahl- und/oder Drehmomentanpassung möglich.

In einfacher und bauraumsparender Weise kann dabei die Anpassstufe eine Vorgelegestufe sein.

Von dem Durchtrieb oder einer Welle der ersten Schaltstufe oder der zweiten Schaltstufe kann in bauraumsparender Weise ein Zusatzaggregat drehbar antreibbar sein, wobei das Zusatzaggregat eine Notlenkpumpe einer Lenkanordnung sein kann.

An dem Durchtrieb oder einer Welle der ersten Schaltstufe oder der zweiten Schaltstufe kann eine Feststellbremse angeordnet sein, durch die der Durchtrieb oder die Welle der ersten Schaltstufe oder der zweiten Schaltstufe drehblockierbar ist.

Sowohl das Zusatzaggregat als auch die Feststellbremse sind dabei in direkter Verbindung mit einem Rad.

Ausführungsbeispiele der Erfindung sind in der Zeichnung dargestellt und werden im Folgenden näher beschrieben. Es zeigen
- Figur 1: eine Prinzipdarstellung eines ersten Ausführungsbeispiels einer Antriebsvorrichtung einer Achse eines Kraftfahrzeugs
- Figur 2: eine Prinzipdarstellung eines zweiten Ausführungsbeispiels einer Antriebsvorrichtung einer Achse eines Kraftfahrzeugs
- Figur 3: eine Prinzipdarstellung eines dritten Ausführungsbeispiels einer Antriebsvorrichtung einer Achse eines Kraftfahrzeugs
- Figur 4: eine Prinzipdarstellung eines vierten Ausführungsbeispiels einer Antriebsvorrichtung einer Achse eines Kraftfahrzeugs
- Figur 5: eine Prinzipdarstellung eines fünften Ausführungsbeispiels einer Antriebsvorrichtung einer Achse eines Kraftfahrzeugs.

Die dargestellten Antriebsvorrichtungen weisen ein Achsmittengetriebe 1 auf, von dem in einer Achsausrichtung 3 zwei einander entgegengerichtete erste Halbachsen 2 drehbar antreibbar sind, die eine erste Achse 16 bilden. An den dem Achsmittengetriebe 1 abgewandten Enden der Halbachsen 2 sind drehfest nicht dargestellte Räder angeordnet. Das Achsmittengetriebe 1 ist ein Differentialgetriebe, das ein zu den Halbachsen 2 koaxiales Antriebskegelrad 4 aufweist, das von einem Ausgangskegelrad 5 drehbar antreibbar ist. Das Ausgangskegelrad 5 ist auf einer Ausgangswelle 6 einer zweigängigen Schaltstufe 7 drehfest angeordnet.

Auf der einen Seite des Achsmittengetriebes 1 ist eine Elektromaschine 8 angeordnet, durch die über einen Durchtrieb 9 die auf der anderen Seite des Achsmittengetriebes 1 angeordnete Schaltstufe 7 drehbar antreibbar ist. Der Durchtrieb quert dazu rechtwinklig die Achsausrichtung 3 der Halbachsen 2 und bildet eine Eingangswelle 10 der Schaltstufe 7.

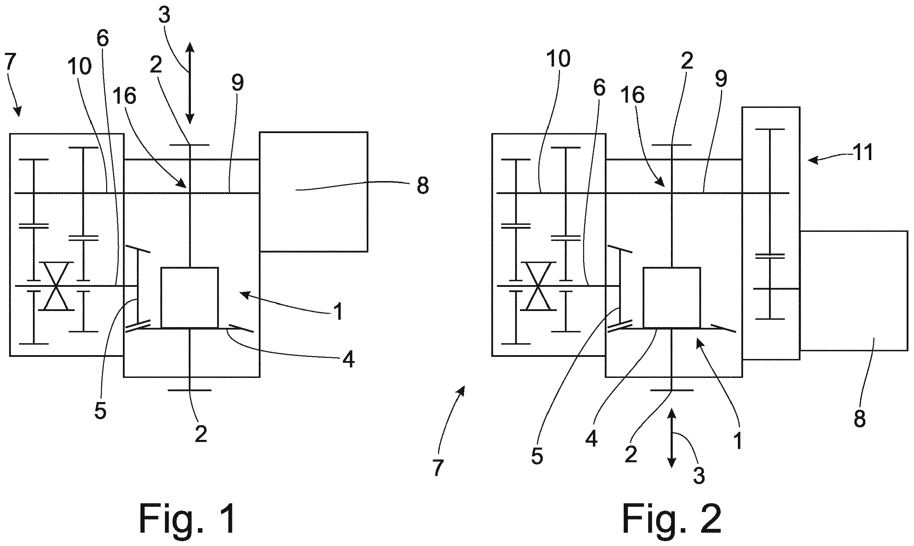

In Figur 1 ist der Durchtrieb 9 unmittelbar von der Elektromaschine 8 angetrieben, während in den Figuren 2 bis 5 der Durchtrieb 9 über eine Vorgelegestufe 11 von der Elektromaschine 8 angetrieben wird.

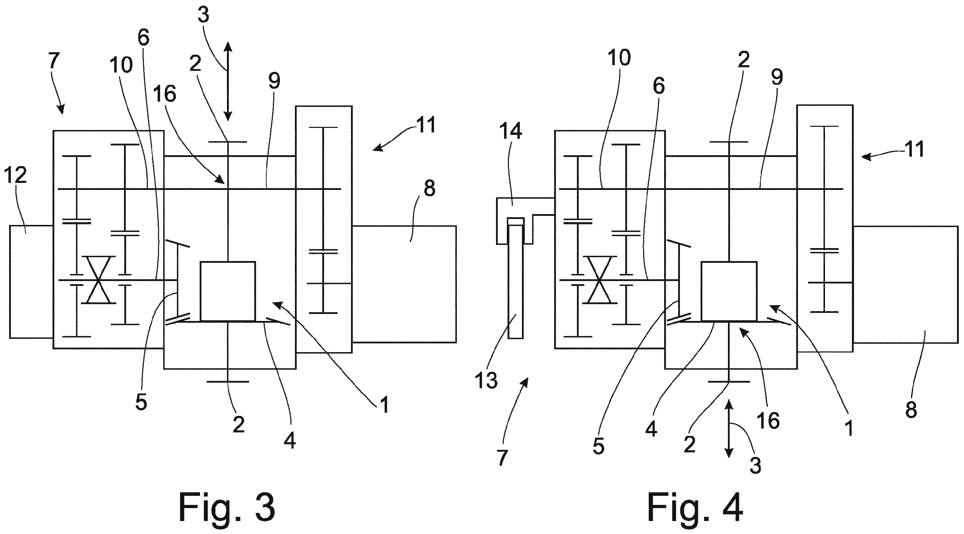

In Figur 3 ist neben der Schaltstufe 7 eine Notlenkpumpe 12 angeordnet, die von der Ausgangswelle 6 der Schaltstufe 7 angetrieben wird.

In Figur 4 ist auf dem dem Achsmittengetriebe abgewandten Ende der Ausgangswelle 6 der Schaltstufe 7 eine Bremsscheibe 13 drehfest angeordnet, die von einer Feststellbremse 14 blockierbar ist.

Sowohl die Notlenkpumpe 12 als auch die Bremsscheibe 13 sind über das Achsmittengetriebe 1 und die Halbachsen 2 unterbrechungsfrei mit den Rädern in Verbindung.

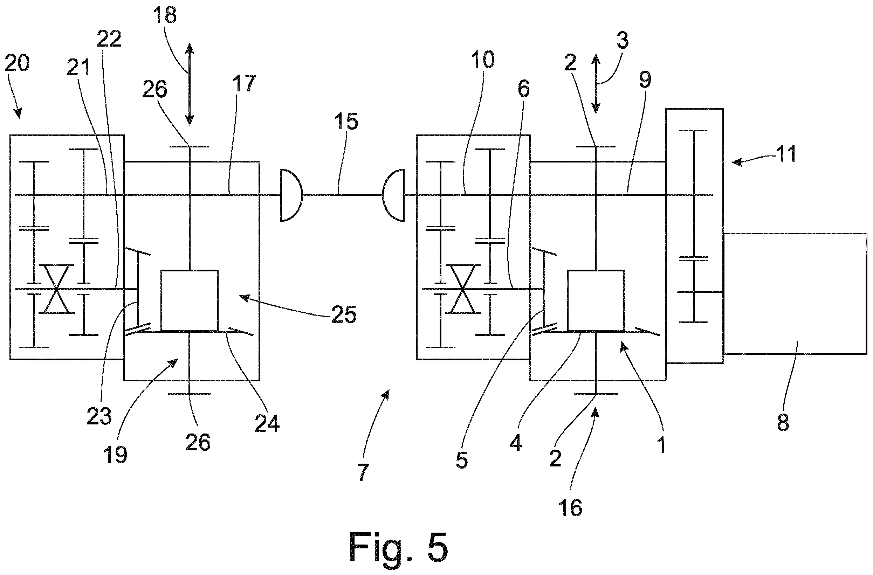

In Figur 5 ist die Eingangswelle 10 der Schaltstufe 7 über eine Gelenkwelle 15 mit einem zweiten Durchtrieb 17 drehfest verbunden, der eine zweite Achsausrichtung 18 zweier einander entgegengerichteter zweiter Halbachsen 2 rechtwinklig quert, die eine zweite Achse 19 bilden.

Der zweite Durchtrieb 17 bildet eine zweite Eingangswelle 21 einer zweiten zweigängigen Schaltstufe 20.

Auf einer zweiten Ausgangswelle 22 ist ein zweites Ausgangskegelrad 23 der zweiten Schaltstufe 20 drehfest angeordnet, durch das ein zweites Antriebskegelrad 24 eines zweiten Achsmittengetriebes 25 antreibbar ist. Das zweite Achsmittengetriebe 25 ist ein Differentialgetriebe, das durch das zwei zweite Halbachsen 26 der zweiten Achse 19 drehbar antreibbar sind.

An den dem zweiten Achsmittengetriebe 25 abgewandten Enden der zweiten Halbachsen 26 sind drehfest nicht dargestellte zweite Räder angeordnet.

### Bezugszeichen

- 1: Achsmittengetriebe
- 2: erste Halbachsen
- 3: Achsausrichtung
- 4: Antriebskegelrad
- 5: Ausgangskegelrad
- 6: Ausgangswelle
- 7: Schaltstufe
- 8: Ausgangswelle
- 9: Durchtrieb
- 10: Eingangswelle
- 11: Vorgelegestufe
- 12: Notlenkpumpe
- 13: Bremsscheibe
- 14: Feststellbremse
- 15: Gelenkwelle
- 16: erste Achse
- 17: zweiter Durchtrieb
- 18: zweite Achsausrichtung
- 19: zweite Achse
- 20: zweite Schaltstufe
- 21: zweite Eingangswelle
- 22: zweite Ausgangswelle
- 23: zweites Ausgangskegelrad
- 24: zweites Antriebskegelrad
- 25: zweites Achsmittengetriebe
- 26: zweite Halbachen

## Patentansprüche

1. Antriebsvorrichtung einer Achse (16) eines Kraftfahrzeugs mit einer Elektromaschine (8), von der über eine Schaltstufe (7) und ein Differentialgetriebe zwei einander entgegengerichtete Halbachsen (2) drehbar antreibbar sind, an deren dem Getriebe abgewandten Enden Räder angeordnet sind, **dadurch gekennzeichnet, dass** das Differentialgetriebe ein Achsmittengetriebe (1) ist, auf dessen zu den Halbachsen (2) einen Seite die Elektromaschine (8) und auf dessen zu den Halbachsen (2) anderen Seite die Schaltstufe (7) angeordnet ist, wobei die Schaltstufe (7) über einen die Achsausrichtung (3) der Halbachsen (2) querenden Durchtrieb (9) von der Elektromaschine (8) drehbar antreibbar ist.

2. Antriebsvorrichtung nach Anspruch 1, **dadurch gekennzeichnet, dass** das Achsmittengetriebe (1), die Elektromaschine (8) und die Schaltstufe (7) an einem Rahmen des Kraftfahrzeugs befestigt sind.

3. Antriebsvorrichtung nach Anspruch 2, **dadurch gekennzeichnet, dass** das Achsmittengetriebe (1), die Elektromaschine (8) und die Schaltstufe (7) eine vormontierbare Baueinheit bilden.

4. Antriebsvorrichtung nach einem der vorhergehenden Ansprüche, **dadurch gekennzeichnet, dass** mehrere Achsen des Kraftfahrzeugs ein Achsmittengetriebe aufweisen, auf dessen zu den Halbachsen einen Seite die Elektromaschine und auf dessen zu den Halbachsen anderen Seite die Schaltstufe angeordnet ist, wobei die Schaltstufe über einen die Achsausrichtung querenden Durchtrieb von der Elektromaschine drehbar antreibbar ist.

5. Antriebsvorrichtung nach einem der Ansprüche 1 bis 3, **dadurch gekennzeichnet, dass** von dem Durchtrieb (9) über eine zweite Schaltstufe (20) ein zweites Achsmittengetriebe (25) antreibbar ist, durch das zwei einander entgegengerichtete zweite Halbachsen (26) drehbar antreibbar sind, wobei der Durchtrieb (9) die Achsausrichtung (18) der zweiten Halbachsen (28) zur der auf der der ersten Schaltstufe (7) abgewandten Seite des zweiten Achsmittengetriebes (25) angeordneten zweiten Schaltstufe (20) quert.

6. Antriebsvorrichtung nach einem der vorhergehenden Ansprüche, **dadurch gekennzeichnet, dass** von der Elektromaschine (8) über eine Anpaßstufe der Durchtrieb (9) drehbar antreibbar ist.

7. Antriebsvorrichtung nach Anspruch 4, **dadurch gekennzeichnet, dass** die Anpaßstufe eine Vorgelegestufe (11) ist.

8. Antriebsvorrichtung nach einem der vorhergehenden Ansprüche, **dadurch gekennzeichnet, dass** von dem Durchtrieb (9) oder einer Welle (6, 22) der ersten Schaltstufe (7) oder der zweiten Schaltstufe (20) ein Zusatzaggregat drehbar antreibbar ist.

9. Antriebsvorrichtung nach einem der vorhergehenden Ansprüche, **dadurch gekennzeichnet, dass** das Zusatzaggregat eine Notlenkpumpe (12) einer Lenkanordnung ist.

10. Antriebsvorrichtung nach einem der vorhergehenden Ansprüche, **dadurch gekennzeichnet, dass** an dem Durchtrieb (9) oder einer Welle (6) der ersten Schaltstufe (7) oder der zweiten Schaltstufe eine Feststellbremse (14) angeordnet ist, durch die der Durchtrieb (9) oder die Welle (6) der ersten Schaltstufe (7) oder der zweiten Schaltstufe drehblockierbar ist.
